# EUROPEAN PATENT SPECIFICATION

(11) **EP 2 213 572 B1**
(45) Date of publication and mention of the grant of the patent: **27.02.2013**
(21) Application number: 09450023.8
(22) Date of filing: 29.01.2009
(51) Int. Cl.: B64G 1/64, B64G 1/22

(54) **Device for holding down a mobile structure to a spacecraft**
Vorrichtung zum Herunterdrücken einer beweglichen Struktur auf ein Raumschiff
Dispositif pour l'abaissement d'une structure mobile sur un navette spatiale

(43) Date of publication of application: 04.08.2010
(73) Proprietor: RUAG Aerospace Austria GmbH, 1120 Vienna (AT)
(72) Inventor: Janu, Paul, 7100 Neusiedl am See (AT); Mitterbauer, Gerhard, 2100 Korneuburg (AT); Neugebauer, Christian, 1020 Wien (AT)
(74) Representative: Haffner und Keschmann Patentanwälte KG

(56) References cited:
- EP-A- 0 488 872
- EP-B- 1 255 675
- JP-A- 11 311 282
- SU-A1- 1 784 535

## Description

The invention relates to a device for holding down a mobile structure to a spacecraft and for releasing said mobile structure, the device comprising a stationary structure fixed to the spacecraft, an actuator, a releasable member driven to movement in an axial direction relative to the stationary structure upon activation of the actuator and a locking assembly arranged to hold down or release the mobile structure depending on the axial position of the releasable member, wherein the locking assembly comprises a plurality of circumferentially arranged locking members being movable in a radial direction into and out of engagement with the mobile structure. A device of this kind is disclosed in EP 0 488 872 Al.

Spacecrafts must be engineered to withstand launch loads imparted by the launch vehicle, and must have a point of attachment for all its subsystems, such as mobile structures or appendage. Depending upon mission profile, the structural subsystem might further need to withstand loads imparted by entry into the atmosphere of another planetary body and landing on the surface of another planetary body. The hold down and release mechanism is a standard element for spacecrafts in order to achieve mission related critical functions. Their main functions are to secure during launch and release once in orbit moveable payload items, deployable appendages and separable mission elements. They can also be used in order to achieve timely synchronisation for the deployment and/or ejection of specific appendages or separable mission elements. The primary function of a hold down and release mechanism is to attach the appendage rigidly to the spacecraft during launch and transmitting the inertial loads between the spacecraft and the appendage by a stiff connection. When the spacecraft arrives in space the actuator of the hold down and release mechanism is commanded to release the appendage and the moveable parts of the hold down and release mechanism shall retract so that they do not interfere with the separation path of the appendage.

Typical appendages are electro propulsion thrusters, chemical thrusters, antennas, separable spacecrafts, landers, doors, booms or radiators.

To hold a mobile structure or appendage on a spacecraft, currently clamp band type mechanisms, multiple release nut interfaces or hook type interfaces (which are actuated by triggering devices like wire cutters or pin pullers) are used.

Large-size appendages are typically attached to spacecrafts by clamp bands. A clamp band connects two conical parts of same size one on the spacecraft and the other one on the appendage by a tangential preloaded circumferential band with a "V" shaped cross section. A pyrotechnical actuator or a low shock release nut opens the clamp band to separate the appendage from the Spacecraft.

An advantage of the clamp band is that the clamp band applies the pre-strain locally and not in axial direction so that the release energy does not accelerate the appendage. Moreover, a clamp band leaves space in the centre of the separation plane and one single actuator is sufficient, which increases reliability. The disadvantages are a relatively high mass when used for a small appendage and the obstruction of the travel way of the appendage after release in the separation plane and around two rotational directions (around the two perpendicular axes of the separation plane). The obstruction of these rotational movements makes a clamp band unfavourable for hold down and release mechanisms used for pointing appendages like thrusters or appendages required motions around the stowed position.

Mid-size appendages are usually attached to spacecrafts by a plurality of release nuts, which clamp the appendage via separable interface planes in flat-flat or cup-cone or cone-cone configurations to a spacecraft. As each release nut results in a considerable increase in mass, the total mass of such a hold down and release mechanism is relatively high. The reliability is reduced since separation relies on actuation of all release nuts of the mechanism. A malfunction of one single release nut results in that the appendage is not properly separating from the spacecraft. Moreover, the travel way of the appendage after release may be obstructed in several directions depending on the configuration of the release nuts, the interface type and possible nut retraction provisions.

Small sized appendages are attached to a spacecraft via hinged hooks, which are held in place by a clamp wire, which is pretensioned during launch or a pin puller is used. For release of the appendage the clamp wire is cut by a cable cutter mechanism. Since such multiple hook mechanisms consist of a high number of hinges and moving parts, the reliability of such a hold down and release mechanism is limited.

It is an object of the present invention to provide an improved hold down and release mechanism for mobile structures, which is capable of securely holding down high loads and quickly releasing such high loads with a minimum of mechanical shock imparted to both, the spacecraft and the mobile structure. In particular, the hold down and release mechanism shall be capable of transmitting considerable inertial loads in axial and lateral directions, such as, e.g., a quasi-static acceleration of 40g of a 10 kg appendage. Further, the hold down and release mechanism shall hold the mobile structure during launch, i.e. in the stowed configuration, firmly on the spacecraft, whereby the connection shall form a rigid link so that the eigenfrequency of the assembly is in a suitable range, such as, e.g., in the >60 Hertz range. At the same time, the hold down and release mechanism shall have low mass.

It is a further object of the present invention to provide a hold down and release mechanism that can be actuated by a minimum number of actuators, such as release nuts, so that the reliability is maximized. The design of the hold down and release mechanism shall allow the use of a standard off-the-shelf release nut.

It is a further object of the present invention to provide a hold down and release mechanism designed so that after deployment of the hold down and release mechanism the travel way of the appendage during for example pointing of the thruster is not obstructed by any elements of the hold down and release mechanism.

It is a further object of the present invention to provide a hold down and release mechanism, the electrically operated parts of which are connected to the spacecraft and not to the mobile structure to be released so that one can do without a separation of cable harness.

It is a further object of the present invention to provide a hold down and release mechanism consisting of standard space-compatible materials.

It is a further object of the present invention to provide a hold down and release mechanism that has a constructional height as low as possible so that the pendulum mode of the appendage on the mechanism is driven to the highest possible frequency and so that the assembly consumes minimum space on the spacecraft.

It is a further object of the present invention to provide a hold down and release mechanism designed so that the motorization of the actuation complies with space standard motorization specifications (ECSS E30 part 3A).

It is a further object of the present invention to provide a hold down and release mechanism designed so that sliding contacts are avoided, so that no micro sliding occurs during launch; separable contacts shall have a material pairing which prevents excessive adhesion and which is not sensitive to corrosion issues.

To solve these objects the invention provides for a hold down and release mechanism of the type as initially described and **characterized in that** the locking assembly comprises a plurality of circumferentially arranged locking members being movable in a radial direction into and out of engagement with the mobile structure, the locking members being connected to the releasable member via first levers, such that the axial movement of the releasable member and the radial movement of the locking member are coupled with each other by way of a bent lever type mechanism. Due to the locking members being movable in a radial direction into and out of engagement with the mobile structure, the latter, in the stowed configuration, is connected to the spacecraft by a direct load path, which transmits the launch loads via pure tension and shear loads. Therefore, this design results in a stiff, at the same time mass-saving mechanism.

According to the invention the locking members are all connected to the releasable member of the actuator by first levers. Thereby, a single actuator is sufficient for driving all locking members and a standard of the shelf release nut can be used. The actuator, such as the release nut, is attached to the spacecraft's side of the mechanism, so that no separation of cable harness is required and the mass of the parts that are attached to the appendage is kept low. As only one single actuator is used, which may be of the redundant actuation type, the reliability of the mechanism is high.

The actuator is arranged such that the separation of the actuator's releasable member is effected along an axial displacement path, whereby the axial movement of the releasable member and the radial movement of the locking member are coupled with each other by way of a bent lever type mechanism formed by the first levers. In doing so, high locking forces can be applied by the locking members, while the load on the actuator is kept low.

According to a preferred embodiment of the invention, in the locked position of the mobile structure, the first levers and the axial displacement path of the releasable member form an acute angle, the angle preferably being in the range of 5 - 20°. Thus, in the stowed configuration the bent lever is in a nearly straight configuration so that the load on the actuator is low and a small actuator, such as a standard release nut, can be used. After commanded release of the releasable member the vertical component of the compression force of the first lever accelerates the releasable member to a downward position.

In order to apply a suitable compression force, the configuration is preferably devised such that the first levers are designed to be elastically compressible in their longitudinal direction and are arranged to be compressed and preloaded in the locked position of the mobile structure. Thus, the actuation force of the mechanism is stored as strain energy in the spring-like designed first levers of the bent lever system. No separate actuation springs are required, which results in a reduced complexity and reduced mass. A further advantage is that the deformation of the preload springs can be measured directly. This allows a quick check of the preload even if the mechanism is integrated onto the spacecraft.

According to a preferred embodiment of the invention the first levers extend in radial directions with respect to the axial displacement path of the releasable member and are arranged at equal angles relative to each other, whereby two of the first levers are preferably each arranged diametrically opposed to each other. In this way, the radial forces applied to the mobile structure by the locking members are directed in opposed directions, but the force vectors intersect each other on the central axis so that equilibrium is achieved. In this connection, a further enhancement can be reached, if according to a preferred embodiment the locking members are arranged in a radial plane extending perpendicular to the axial displacement path of the releasable member.

In order to provide a guide for the radial movement of the locking members into and out of engagement with the mobile structure, the inventive device preferably comprises a plurality of second levers, one end of which is each fixed to the stationary structure and the other end of which each carries one of said locking members. According to a preferred embodiment the second levers are designed as elastically bendable levers and are arranged to be preloaded in the locked position of the mobile structure. Due to the second levers being elastically bendable they can apply a radially inwardly directed force on the locking members so that the locking members can be completely retracted from the mobile structure. In particular, the spring force of the second levers comes into action once the first levers are offloaded, resulting in that the retraction of the locking members continues driven by the spring force of the second levers until also the second levers are fully unloaded.

According to a preferred embodiment of the invention the connection between the first and the second levers is realized by a hinge. This configuration results in that after release the levers do not become free and in particular do not form "space debris".

According to a preferred embodiment of the invention the locking members each have a protrusion that engages into a recess formed on the mobile structure. In this way, the contact areas between the locking members and the mobile structure are not established by sliding interfaces but separate from each other without sliding. This reduces the risk of cold welding and fretting. Advantageously, the recess is formed on the inner circumference of a ring-shaped member of the mobile structure. As the separable interface is located on a ring-shaped member a large contact area can be realized. This allows the use of plastic material inlays for the interface, such as, e.g., VESPEL material, so that the adhesion between the separable planes is minimized.

As mentioned above, the hold down and release mechanism can be realized with a standard actuator as known in the prior art. Preferred is a configuration, where the releasable member of the actuator can be released in an axial direction. Such actuators have become known as "release nuts". According to a preferred embodiment of the instant invention the actuator is designed as a frangible release nut. In particular, the actuator is advantageously designed to be actuated by electronic command.

Preferably, the actuator comprises a multi-part spool held together by a wound restraining wire, the releasable member being held in the spool and bearing against a stop of the spool parts, and a frangible fuse, breaking of which causes the restraining wire to unwind and to free the parts of the spool to separate. Such an actuator is disclosed in EP 1 255 675 B1.

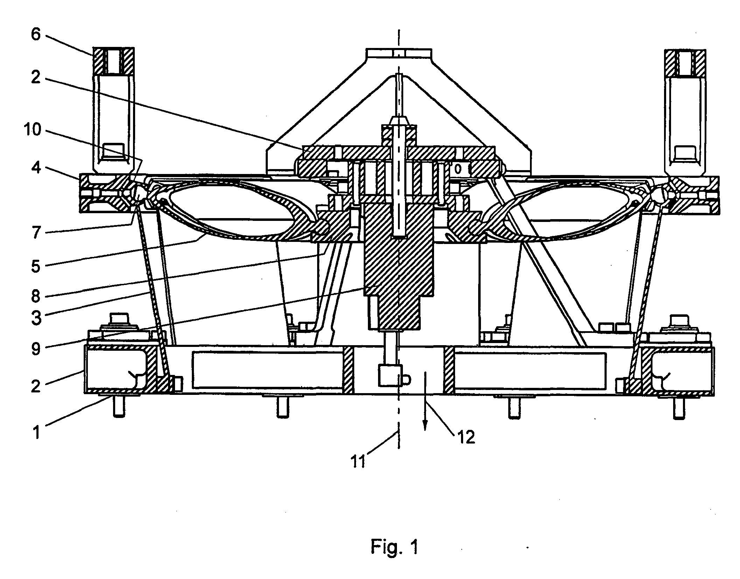

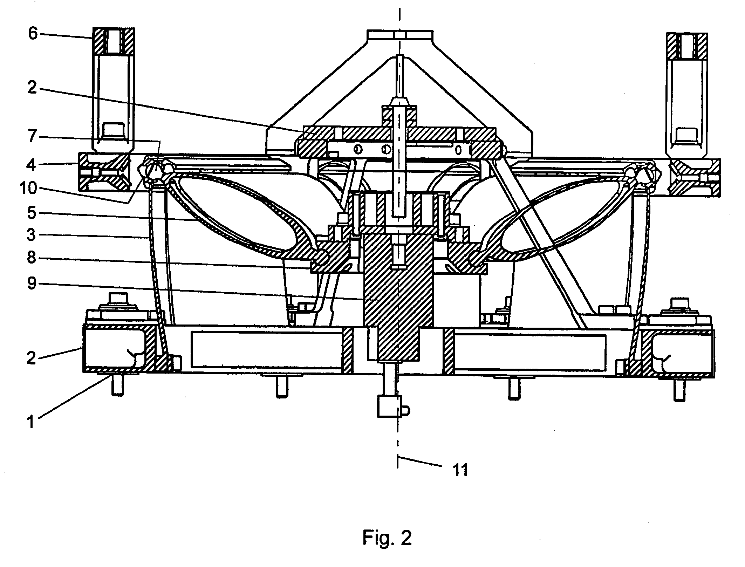

The invention will now be described with reference to an exemplary embodiment shown in the attached figures. Fig.1 shows a hold down and release mechanism in the stowed configuration. Fig.2 shows the hold down and release mechanism in the deployed configuration.

The hold down and release mechanism is attached to the spacecraft with the spacecraft interface 1. The stationary structure 2 holds circumferentially arranged vertical levers 3. These vertical levers are designed in such a way that they are bent straight in the stowed configuration (when preloaded). Therefore, in the deployed configuration of the mechanism with the vertical lever 3 unloaded they have a certain curvature. A plurality of vertical levers 3 is arranged circumferentially with respect to the axis 11 of the hold down and release mechanism. The vertical levers 3 are pressed into the mobile structure 4 via the horizontal levers 5. The horizontal levers 5 are arranged to extend in the radial direction with respect to the axis 11 of the hold down and release mechanism. The mobile structure 4 is ring-shaped so that the radial forces from the horizontal levers 5 equalize themselves. On the mobile structure the appendage is attached on the appendage interface 6. The connection between the vertical lever 3 and the horizontal lever 5 is realized by a hinge 7. A similar hinge forms the connection between the horizontal lever 5 and the releasable member 8, which is designed as a preload plate. The preload plate 8 is placed in the centre of the horizontal levers 5 and attached to the stationary structure 2 by an actuator 9, in particular a release nut, which allows electrically commanded separation of the preload plate 8 from the stationary structure 2. The separation of the preload plate 8 from the stationary structure 2 is done by displacement of the preload plate along the axis 11, i.e. in direction of arrow 12, as becomes apparent when comparing the positions of preload plate 8 in fig. 1 and fig. 2.

The appendage is attached on the appendage interface 6. The load path runs directly from the spacecraft interface 1 of the stationary structure 2 over the vertical lever 3 to the mobile structure 4 to the appendage interface 6.

Two opposite horizontal levers 5 and the preload plate 8 form a bent lever system which compresses the vertical levers 3 onto the mobile structure 4 by the "V" shaped locking members 10. The horizontal compression force is then determined by the compressive shortening of the horizontal lever 5, which is determined by the mechanism geometry. The horizontal lever's shape allows manufacturing by a wire erosion process so that the springs can be manufactured cheaply and with high accuracy.

The bent lever, which is formed by two opposite horizontal levers 5 and the preload plate 8 is not completely straight in stowed configuration but slightly off the centre, which means that the horizontal levers 5 and the axial displacement path of the preload plate 8 form an acute angle, the angle preferably being in the range of 5 - 20°, so that after commanded release of the release nut 9 the vertical component of the compression force of the horizontal lever 5 accelerates the release nut to a downward position. When the horizontal lever springs are offloaded, this movement continues driven by the spring force of the vertical lever 3 until also the vertical lever 3 is fully unloaded. Then, the locking members 10 have been fully retracted from the mobile structure 4, which means that they have moved in a radial direction out of engagement with the "V" grove, and the mobile structure 4 is released free to rotate in any direction and free to translate in longitudinal direction. This deployed configuration is shown in fig. 2.

In an alternative design of this hold down and release mechanism the hinges 7 are realized by flextures.

To sum up, the described hold down and release mechanism consists of a plurality of radially oriented bent lever systems actuated by a central release nut and motorized by a defined deformation of the bent levers which follow a spring design and lock a ring shaped mobile plate radially in the "V"-shaped groves that are circumferentially arranged on a ring, which is attached to the appendage.

In a deployed configuration the mobile structure is free to move in all rotational axes and it is free to move in both directions of the longitudinal axes, which is desirable for a hold down and release mechanism, for a thruster or antenna pointing applications.

The release nut can be exchanged from the side of the appendage so that an exchange of the release nut is possible when the mechanism is still attached to the spacecraft.

The constructional height of the hold down and release mechanism is small in the stowed and in the deployed configuration so that the centre of gravity of the appendage is kept close to the spacecraft, which improves the pendulum modes of the assembly.

## Claims

1. Device for holding down a mobile structure (4) to a spacecraft and for releasing said mobile structure (4), the device comprising a stationary structure (2) fixed to the spacecraft, an actuator (9), a releasable member (8) driven to movement in an axial direction (12) relative to the stationary structure (2) upon activation of the actuator (9) and a locking assembly arranged to hold down or release the mobile structure (4) depending on the axial position of the releasable member (8), wherein the locking assembly comprises a plurality of circumferentially arranged locking members (10) being movable in a radial direction into and out of engagement with the mobile structure (4), **characterized in that** the locking members (10) are connected to the releasable member (8) via first levers (5), such that the axial movement of the releasable member (8) and the radial movement of the locking members (10) are coupled with each other by way of a bent lever type mechanism.

2. Device according to claim 1, wherein the first levers (5) are designed to be elastically compressible in their longitudinal direction and are arranged to be compressed and preloaded in the locked position of the mobile structure (4).

3. Device according to claim 2, wherein the first levers (5) extend in radial directions with respect to the axial displacement path of the releasable member (8) and are arranged at equal angles relative to each other.

4. Device according to claim 1, 2 or 3, wherein two of the first levers (5) are each arranged diametrically opposed to each other.

5. Device according to any one of claims 1 to 4, wherein the locking members (10) are arranged in a radial plane extending perpendicular to the axial displacement path of the releasable member (8).

6. Device according to any one of claims 1 to 5, wherein in the locked position of the mobile structure (4) the first levers (5) and the axial displacement path of the releasable member (8) form an acute angle, the angle preferably being in the range of 5 - 20°.

7. Device according to any one of claims 1 to 6, further comprising a plurality of second levers (3), one end of which is each fixed to the stationary structure (2) and the other end of which each carries one of said locking members (10).

8. Device according to claim 7, wherein the second levers (3) are designed as elastically bendable levers and are arranged to be preloaded in the locked position of the mobile structure (4).

9. Device according to claim 7 or 8, wherein the connection between the first (3) and the second levers (5) is realized by a hinge (7).

10. Device according to any one of claims 1 to 9, wherein the locking members (10) each have a protrusion that engages into a recess formed on the mobile structure (4).

11. Device according to claim 10, wherein the recess is formed on the inner circumference of a ring-shaped member of the mobile structure (4).

12. Device according to any one of claims 1 to 11, wherein the actuator (9) is designed as a frangible release nut.

13. Device according to any one of claims 1 to 12, wherein the actuator (9) is designed to be actuated by electronic command.

14. Device according to any one of claims 1 to 13, wherein the actuator comprises a multi-part spool held together by a wound restraining wire, the releasable member being held in the spool and bearing against a stop of the spool parts, and a frangible fuse, breaking of which causes the restraining wire to unwind and to free the parts of the spool to separate.

## Patentansprüche

1. Vorrichtung zum Niederhalten einer beweglichen Struktur (4) an einem Raumfahrzeug und zum Freigeben der beweglichen Struktur (4), wobei die Vorrichtung eine stationäre Struktur (2), die am Raumfahrzeug fixiert ist, einen Aktuator (9), ein lösbares Element (8), das in einer axialen Richtung (12) relativ zur stationären Struktur (2) bei Aktivierung des Aktuators (9) in Bewegung gesetzt wird, und eine Verriegelungsbaugruppe umfasst, die angeordnet ist, die bewegliche Struktur (4) abhängig von der axialen Stellung des lösbaren Elementes (8) niederzuhalten oder freizugeben, wobei die Verriegelungsbaugruppe mehrere in Umfangsrichtung angeordnete Verriegelungselemente (10) umfasst, die in einer radialen Richtung in und außer Eingriff mit der beweglichen Struktur (4) beweglich sind, **dadurch gekennzeichnet, dass** die Verriegelungselemente (10) über erste Hebel (5) mit dem lösbaren Element (8) derart verbunden sind, dass die axiale Bewegung des lösbaren Elementes (8) und die radiale Bewegung der Verriegelungselemente (10) mittels eines KniehebelMechanismus miteinander gekoppelt sind.

2. Vorrichtung nach Anspruch 1, **dadurch gekennzeichnet, dass** die ersten Hebel (5) so konstruiert sind, dass sie in ihrer Längsrichtung elastisch komprimierbar sind, und so angeordnet sind, dass sie in der verriegelten Stellung der beweglichen Struktur (4) komprimiert und vorgespannt sind.

3. Vorrichtung nach Anspruch 2, **dadurch gekennzeichnet, dass** sich die ersten Hebel (5) in Bezug auf den axialen verschiebungsweg des lösbaren Elementes (8) in radiale Richtungen erstrecken und relativ zueinander in gleichen Winkeln angeordnet sind.

4. Vorrichtung nach Anspruch 1, 2 oder 3, **dadurch gekennzeichnet, dass** zwei der ersten Hebel (5) jeweils diametral entgegengesetzt zueinander angeordnet sind.

5. Vorrichtung nach einem der Ansprüche 1 bis 4, **dadurch gekennzeichnet, dass** die Verriegelungselemente (10) in einer radialen Ebene angeordnet sind, die sich senkrecht zum axialen Verschiebungsweg des lösbaren Elementes (8) erstreckt.

6. Vorrichtung nach einem der Ansprüche 1 bis 5, **dadurch gekennzeichnet, dass** in der verriegelten Stellung der beweglichen Struktur (4) die ersten Hebel (5) und der axiale Verschiebungsweg des lösbaren Elementes (8) einen spitzen Winkel bilden, wobei der Winkel vorzugsweise im Bereich von 5 - 20° liegt.

7. Vorrichtung nach einem der Ansprüche 1 bis 6, die ferner mehrere zweite Hebel (3) umfasst, deren eines Ende jeweils an der stationären Struktur (2) fixiert ist und deren anderes Ende jeweils eines der Verriegelungselemente (10) trägt.

8. Vorrichtung nach Anspruch 7, **dadurch gekennzeichnet, dass** die zweiten Hebel (3) als elastisch biegsame Hebel konstruiert sind und so angeordnet sind, dass sie in der verriegelten Stellung der beweglichen Struktur (4) vorgespannt sind.

9. Vorrichtung nach Anspruch 7 oder 8, **dadurch gekennzeichnet, dass** die Verbindung zwischen den ersten (3) und den zweiten Hebeln (5) durch ein Scharnier (7) realisiert ist.

10. Vorrichtung nach einem der Ansprüche 1 bis 9, **dadurch gekennzeichnet, dass** die Verriegelungselemente (10) jeweils einen vorsprung aufweisen, der in eine Vertiefung eingreift, die auf der beweglichen Struktur (4) gebildet ist.

11. Vorrichtung nach Anspruch 10, **dadurch gekennzeichnet, dass** die Vertiefung auf dem inneren Umfang eines ringförmigen Elementes der beweglichen Struktur (4) gebildet ist.

12. Vorrichtung nach einem der Ansprüche 1 bis 11, **dadurch gekennzeichnet, dass** der Aktuator (9) als zerbrechliche Lösemutter konstruiert ist.

13. Vorrichtung nach einem der Ansprüche 1 bis 12, **dadurch gekennzeichnet, dass** der Aktuator (9) konstruiert ist, per elektronischem Befehl betätigt zu werden.

14. Vorrichtung nach einem der Ansprüche 1 bis 13, wobei der Aktuator eine mehrteilige Spule, die durch einen gewickelten Rückhaltedraht zusammengehalten ist, wobei das lösbare Element in der Spule gehalten ist und gegen einen Anschlag der Spulenteile drückt, und eine zerbrechliche Sicherung umfasst, deren Brechen das Abwickeln des Rückhaltedrahtes und das Freigeben der Teile der Spule zum Trennen verursacht.

## Revendications

1. Dispositif pour tenir une structure mobile (4) à un engin spatial et pour libérer ladite structure mobile (4), le dispositif comprenant une structure fixe (2) fixée à l'engin spatial, un dispositif d'actionnement (9), un élément libérable (8) entraîné par un mouvement dans une direction axiale (12) par rapport à la structure fixe (2) lors de l'activation du dispositif d'actionnement (9) et un ensemble de verrouillage destiné à teinr ou libérer la structure mobile (4) en fonction de la position axiale de l'élément libérable (8), où l'ensemble de verrouillage comprend une pluralité d'éléments de verrouillage (10) disposés en circonférence, mobile dans une direction radiale en contact, et hors de contact, avec la structure mobile (4) ; **caractérisé en ce que** les éléments de verrouillage (10) sont reliés à l'élément libérable (8) par l'intermédiaire de premiers leviers (5), de sorte que le mouvement axial de l'élément libérable (8) et le mouvement radial des éléments de verrouillage (10) sont couplés les uns aux autres par l'intermédiaire d'un mécanisme à levier à grenouillère.

2. Dispositif selon la revendication 1, **caractérisé en ce que** les premiers leviers (5) sont conçus pour être élastiquement compressibles dans leur direction longitudinale et sont agencées pour être comprimés et précontraints dans la position de verrouillage de la structure mobile (4).

3. Dispositif selon la revendication 2, **caractérisé en ce que** les premiers leviers (5) s'étendent dans des directions radiales par rapport au déplacement axial de l'élément libérable (8) et sont disposés à des angles égaux par rapport à l'autre.

4. Dispositif selon la revendication 1, 2 ou 3, **caractérisé en ce que** deux des premiers leviers (5) sont chacun disposés de manière diamétralement opposée l'un par rapport à l'autre.

5. Dispositif selon l'une quelconque des revendications 1 à 4, **caractérisé en ce que** les éléments de verrouillage (10) sont disposés dans un plan radial qui s'étend perpendiculairement à la trajectoire de déplacement axial de l'élément libérable (8).

6. Dispositif selon l'une quelconque des revendications 1 à 5, **caractérisé en ce que** en position de verrouillage de la structure mobile (4), les premiers leviers (5) et le trajet de déplacement axial de l'élément libérable (8) forment un angle aigüe, l'angle étant de préférence dans l'intervalle de 5 à 20 °.

7. Dispositif selon l'une quelconque des revendications 1 à 6, comprenant en outre une pluralité de deuxièmes leviers (3), dont une extrémité est fixée à la structure fixe (2) et dont l'autre extrémité porte l'un desdits éléments de verrouillage (10).

8. Dispositif selon la revendication 7, **caractérisé en ce que** les seconds leviers (3) sont conçus comme des leviers flexibles élastiquement et sont disposés pour être précontraints en position de verrouillage de la structure mobile (4).

9. Dispositif selon la revendication 7 ou 8, **caractérisé en ce que** la connexion entre les premier (3) et second leviers (5) est réalisé par une charnière (7).

10. Dispositif selon l'une quelconque des revendications 1 à 9, **caractérisé en ce que** les éléments de verrouillage (10) ont chacun une saillie qui s'engage dans un renfoncement formé dans la structure mobile (4).

11. Dispositif selon la revendication 10, **caractérisé en ce que** le renfoncement est formé sur la circonférence interne d'un élément en forme d'anneau de la structure mobile (4).

12. Dispositif selon l'une quelconque des revendications 1 à 11, **caractérisé en ce que** le dispositif d'actionnement (9) est conçu comme un écrou de libération frangible.

13. Dispositif selon l'une quelconque des revendications 1 à 12, **caractérisé en ce que** le dispositif d'actionnement (9) est conçu pour être actionné par une commande électronique.

14. Dispositif selon l'une quelconque des revendications 1 à 13, **caractérisé en ce que** le dispositif d'actionnement comprend une bobine en plusieurs parties maintenues ensemble par un fil de retenue enroulé, l'élément libérable étant maintenu dans la bobine et en appui contre une butée des pièces de bobine, et un fusible frangible, dont la rupture provoque la détente de la retenue et la libération des pièces de la bobine à séparer.
